# EUROPÄISCHE PATENTANMELDUNG

(11) **EP 1 818 649 A1**
(43) Veröffentlichungstag der Anmeldung: **15.08.2007**
(21) Anmeldenummer: 07102419.4
(22) Anmeldetag: 14.02.2007
(51) Int. Cl.: G01C 11/00, G01C 15/00

(54) **Verfahren, system und maßstab zur bestimmung und/oder simulation von größenverhältnissen**

(30) Priorität: 14.02.2006 DE 102006006791
(71) Anmelder: myPixx AG, 92637 Weiden (DE)
(72) Erfinder: Krachtus, Werner, 92718, Schirmitz (DE)
(74) Vertreter: Lang, Christian

(57) **Zusammenfassung**

Die vorliegende Erfindung betrifft einen Maßstab (5), ein System sowie ein Verfahren zur Bestimmung und/oder Simulation von Größenverhältnissen in einem ausgewählten Bereich eines Gegenstandes (3) oder eines Ortes, wobei in einem ersten Schritt ein Maßstab (5) mit mindestens zwei Zielpunkten (7,8), die einen definierten oder definierbaren Abstand zueinander aufweisen, und in einem ausgewählten Bereich an dem Gegenstand (3) oder an dem Ort angeordnet werden, wobei in einem zweiten Schritt eine Abbildung des Gegenstandes oder Ortes mit dem in dem ausgewählten Bereich angeordneten Maßstab angefertigt wird und wobei in einem dritten Schritt die so angefertigte Abbildung in eine Datenverarbeitungsanlage eingelesen wird, die derart hergerichtet ist, dass die Größenverhältnisse in einem ausgewählten Bereich bestimmt und/oder simuliert werden.

## Beschreibung

### HINTERGRUND DER ERFINDUNG

### GEBIET DER ERFINDUNG

Die vorliegende Erfindung betrifft ein Verfahren, ein System und einen Maßstab zur Bestimmung und/oder Simulation von Größenverhältnissen in einem ausgewählten Bereich eines Gegenstandes oder eines Ortes.

### STAND DER TECHNIK

Üblicherweise wird bei der Ausstattung von Wohnungen mit Möbeln oder Dekorationsgegenständen, wie Bildern und Gemälden oder bei der Anbringung von Werbeaufschriften auf PKWs oder LKWs oder dergleichen die Größe des Möbels oder Dekorationsgegenstandes bzw. Bildes oder Gemäldes sowie des Werbeaufdrucks dadurch bestimmt, dass der Gegenstand, an dem z. B. der Werbeaufdruck angebracht werden soll oder der Raum bzw. die Wand, die ein Möbel oder ein Bild aufnehmen soll, mit einem Meterstab vermessen werden, um anschließend aus den gewonnen Messdaten die erforderliche Größe des Möbels, Dekorationsgegenstandes, Bildes oder der Werbetafel zu bestimmen. Dies erfordert jedoch einen aufwendigen Messvorgang an dem realen Gegenstand oder Ort, an dem die Größenverhältnisse bestimmt werden sollen. Neben dem Aufwand des Messvorgangs an sich ist hierbei nachteilhaft, dass oftmals die erforderlichen Messdaten nicht zur Verfügung stehen, wenn ein potenzielles Objekt für den Gegenstand oder den Ort gefunden wird und so eine mögliche Kaufentscheidung durch die aufwendige Erfassung der Messdaten aufgeschoben werden muss.

Darüber hinaus ist es selbst beim Vorliegen der Messdaten oft schwierig die Größenordnung des Objekts richtig festzulegen, da es an der Vorstellungskraft mangelt, wie das Objekt in der entsprechenden Umgebung letztendlich aussehen wird.

### LÖSUNG DER ERFINDUNG

### AUFGABE DER ERFINDUNG

Es ist deshalb Aufgabe der vorliegenden Erfindung den oben beschriebenen Nachteilen des Standes der Technik abzuhelfen und Mittel bereitzustellen, die eine einfache Bestimmung von Größenverhältnissen an einem Gegenstand oder an einem Ort und insbesondere eine Simulation der Größenverhältnisse an dem Gegenstand oder dem Ort ermöglichen. Die dazu eingesetzten Mittel sollen einfach herstellbar und einfach bedienbar sein und gleichzeitig gute Ergebnisse hinsichtlich der Bestimmung der Größenverhältnisse und/oder der Simulation liefern.

### WESEN DER ERFINDUNG

Diese Aufgabe wird gelöst mit einem Maßstab mit den Merkmalen des Anspruchs 1, einem System mit den Merkmalen des Anspruchs 8 sowie einem Verfahren mit den Merkmalen des Anspruchs 18. Vorteilhafte Ausgestaltungen sind Gegenstand der abhängigen Ansprüche.

Die Erfindung geht aus von der Idee, dass durch Anordnung eines Maßstabes in einem ausgewählten Bereich eines Gegenstandes oder an einem Ort, dessen Größenverhältnisse bestimmt und/oder simuliert werden sollen, eine einfache Bestimmung und/oder Simulation der Größenverhältnisse dadurch möglich ist, dass eine Abbildung des Gegenstandes oder des Ortes mit dem Maßstab geschaffen wird, die dann als Grundlage zur Bestimmung und/oder Simulation der Größenverhältnisse dient.

Die Bestimmung und/oder Simulation der Größenverhältnisse an dem entsprechenden Gegenstand oder Ort kann dann vorzugsweise durch Auswerte- und/oder Simulationsmittel in einer Datenverarbeitungsanlage erfolgen, in welche die Abbildung des zu bestimmenden oder zu simulierenden Gegenstandes oder Ortes eingelesen werden kann. Die Auswerte- und/oder Simulationsmittel können insbesondere durch programmtechnische Mittel realisiert werden, die auf einem in einer Datenverarbeitungsanlage auslesbaren Speichermittel gespeichert sind. Die Speichermittel können hierbei mobile Speichermittel sein, die zeitweilig mit der Datenverarbeitungsanlage in Verbindung stehen, wie CD-ROMs, USB-Sticks, DVDs und dergleichen oder fest in der Datenverarbeitungsanlage integrierte Speichermittel, wie Festplatten und dergleichen. Darüber hinaus können die programmtechnisch realisierten Auswerte- und/oder Simulationsmittel auch über ein Netzwerk, wie beispielsweise das Internet insbesondere über Datenfernübertragungsmittel zur Verfügung gestellt werden.

Die Auswerte- und/oder Simulationsmittel umfassen vorzugsweise Lesemittel zum Einlesen der Abbildung, die von dem Gegenstand oder dem Ort mit dem angebrachten Maßstab gemacht worden sind. Insbesondere können die Lesemittel derart gestaltet sein, dass sie insbesondere digitale Fotos einlesen können.

Da an dem Maßstab, der an dem Gegenstand oder dem Ort, dessen Größenverhältnisse bestimmt und/oder simuliert werden sollen, angebracht wird, erfindungsgemäß mindestens zwei Zielpunkte vorgesehen sind, die einen definierten oder definierbaren Abstand zueinander aufweisen, umfassen die Auswerte- und/oder Simulationsmittel insbesondere Mittel zum Identifizieren und Lokalisieren der Zielpunkte. Auf diese Weise kann aus der Abbildung die genaue Lage des Maßstabs insbesondere automatisch bestimmt werden.

Dies ist insbesondere dann einfach möglich, wenn die Zielpunkte des Maßstabes gemäß einer vorteilhaften Ausgestaltung, Mittel zur exakten Bestimmung der Punktlage insbesondere Fadenkreuze, Zielringe oder dergleichen aufweisen.

Aufgrund des vorgegebenen definierten Abstands bzw. definierbaren Abstands der zwei Zielpunkte können die Auswerte- und/oder Simulationsmittel nach Erfassung der Zielpunkte für die gesamte Abbildung oder für beliebige Teile daraus die entsprechenden realen Größen, wie z. B. Abstände von Gegenständen und dergleichen bestimmen. Dafür umfassen die Auswerte- und/oder Simulationsmittel entsprechende Berechnungsmittel.

Nach einer bevorzugten Ausgestaltung weist der erfindungsgemäße Maßstab nicht nur zwei Zielpunkte sondern mindestens einen dritten Zielpunkt, vorzugsweise weitere Zielpunkte, insbesondere vier Zielpunkte auf. Insbesondere wenn diese Zielpunkte nicht entlang einer Geraden angeordnet sind, sondern eine Ebene bzw. Fläche aufspannen, kann durch die weiteren Zielpunkte die Abbildungsperspektive bestimmt und/oder korrigiert werden, da üblicherweise weitere vom Standpunkt des Betrachters entfernt liegende Gegenstände kleiner erscheinen und eine Projektion der dreidimensional angeordneten Gegenstände in die Bildebene bei einer einfachen Übertragung des Maßstabs zu einer Verfälschung der Größenverhältnisse führen würde.

Die Auswerte und/oder Simulationsmittel umfassen vorzugsweise auch Mittel zur Erzeugung und/oder zum Einlesen von Bildbestandteilen und/oder Mitteln zum Einblenden von Bildbestandteilen in die Abbildung des Gegenstandes oder Ortes. Auf diese Weise können Objekte, die beispielsweise an dem Gegenstand angeordnet oder in dem Ort angebracht werden sollen, durch Einlesen einer entsprechenden bildlichen Darstellung oder durch Erzeugen eines entsprechenden künstlichen Bildbestandteils in der Umgebung dargestellt, d.h. simuliert werden und zwar im richtigen Maßstab also mit den richtigen Größenverhältnissen.

Insbesondere wenn die Auswerte- und/oder Simulationsmittel auch Mittel zum Darstellen der Abbildung und/oder zusätzlicher Bildbestandteile beispielsweise auf einem Monitor umfassen, kann so eine Simulation der Anbringung des Objekts an einem Gegenstand oder an einem Ort erzielt werden. Die Mittel zum Darstellen der Abbildung und/oder zusätzlicher Bildbestandteile können neben Monitoren auch Druckeinrichtungen oder Speichermittel und dergleichen umfassen. Besonders bevorzugt ist jedoch die bildliche Darstellung über einen Monitor oder dergleichen, da damit dem Nutzer eine unmittelbare visuelle Darstellung des geplanten Objekts in der späteren Umgebung ermöglicht wird. Dies ist insbesondere vorteilhaft, wenn das erfindungsgemäße System und Verfahren im Zusammenhang mit Online-Anwendungen im Internet oder dergleichen eingesetzt wird. Beispielsweise könnte der Nutzer online ein Möbelstück bei einem Online-Möbelhaus aussuchen, eine Abbildung des geplanten Aufstellungsorts mit dem erfindungsgemäßen Maßstab auf den Server des Online-Möbelhauses hochladen und die Auswerte- und/oder Simulationsmittel des Servers des Online-Möbelhauses könnten dann das ausgewählte Möbelstück in der geplanten Umgebung des Nutzers maßstabsgetreu online auf dem Bildschirm des Nutzers darstellen.

Somit ist für den Nutzer lediglich die Anschaffung des entsprechenden Maßstabes erforderlich, während die Auswerte- und/oder Simulationsmittel von dem Online-Möbelhaus zur Verfügung gestellt werden. Es ist jedoch auch denkbar, dass der Nutzer neben dem Maßstab zugleich die Auswerte- und/oder Simulationsmittel auf seiner lokalen Datenverarbeitungsanlage installiert hat. Da das erfindungsgemäße Verfahren und System darauf basiert, dass eine Abbildung des entsprechenden Gegenstandes oder Ortes gemacht wird, umfasst es vorzugsweise auch Mittel zum Erstellen einer entsprechenden Abbildung des Gegenstandes oder des Ortes, insbesondere eine Kamera, vorzugsweise eine Digitalkamera und/oder Einleseeinrichtungen wie einen Scanner oder dergleichen.

Da der Maßstab bei der Anfertigung der Abbildung auf dem Gegenstand oder dem Ort fixiert werden muss, sind vorzugsweise Mittel zum lösbaren Anbringen des Maßstabes an dem Gegenstand oder dem Ort vorgesehen. Hier bieten sich insbesondere Klebemittel oder sonstige Haftmittel, wie Klettverbindungen oder dergleichen an, die leicht wieder lösbar sind.

Insgesamt ist somit mit dem erfindungsgemäßen System oder Verfahren eine einfache und effektive Möglichkeit gegeben, Größenverhältnisse bei einem Gegenstand oder an einem Ort zu bestimmen und/oder zu simulieren.

### KURZBESCHREIBUNG DER FIGUREN

Weitere Vorteile, Kennzeichen und Merkmale der vorliegenden Erfindung werden bei der nachfolgenden Beschreibung von bevorzugten Ausführungsbeispielen anhand der beigefügten Figuren deutlich. Die Figuren zeigen dabei in rein schematischer Weise in
- Fig. 1: eine Seitenansicht eines Ortes, in dem die Größenverhältnisse bestimmt werden sollen;
- Fig. 2: eine Seitenansicht eines erfindungsgemäßen Maßstabs;
- Fig. 3: eine Seitenansicht einer zweiten Ausführungsform eines erfindungsgemäßen Maßstabes; und in
- Fig. 4: eine schematische Darstellung zur Perspektivenkorrektur.

### BEVORZUGTE AUSFÜHRUNGSFORMEN

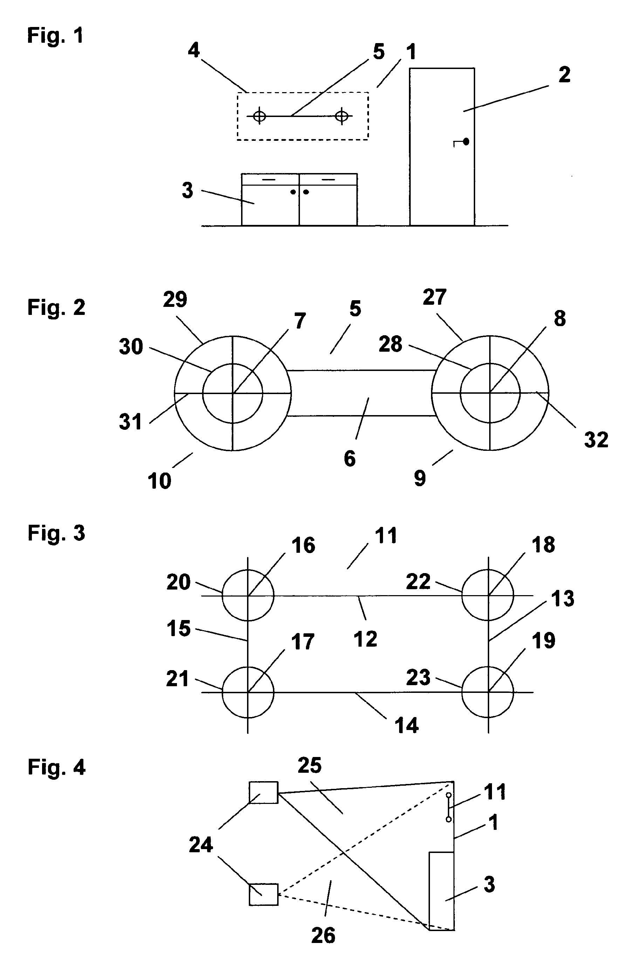

Die Figur 1 zeigt eine Seitenansicht einer Raumwand 1, bei welcher die Größenverhältnisse bestimmt werden sollen. Dies soll deshalb geschehen, weil ein Bild 4 (strichlierte Darstellung) an der Wand 1 angeordnet werden soll. Das Problem besteht hierbei darin, die Bildgröße zu bestimmen, die an dem vorgesehenen Platz an der Wand 1 vorgesehen werden soll. Hierbei spielen insbesondere benachbarte Gegenstande wie die Tür 2 oder die Kommode 3 eine entscheidende Rolle. Um eine Vorstellung zu bekommen, wie ein Bild 4 einer bestimmten Größe in der entsprechenden Umgebung der Wand 1 wirkt, ist es wünschenswert eine virtuelle Ansicht eines derartigen Bildes zu erzeugen, um einen Eindruck davon zu erhalten, ob eine bestimmte Bildgröße in die vorgegebene Umgebung harmonisch einfügbar ist.

Zu diesem Zweck wird erfindungsgemäß ein Maßstab 5 in dem fraglichen Bereich an der Wand 1 angeordnet, in dem später das Bild 4 hängen soll.

Der Maßstab 5, der in Figur 2 dargestellt ist, umfasst zwei Zielpunkte 7 und 8, die beabstandet zueinander angeordnet sind. Bei dem in Figur 2 gezeigten Ausführungsbeispiel eines Maßstabs sind die Zielpunkte 7 und 8 auf kreisrunden Scheiben 10 und 9 angeordnet, die über einen fixen Abstandshalter 6 in Form eines Streifens miteinander verbunden sind.

Auf den kreisförmigen Scheiben, deren Mittelpunkte die Zielpunkte 7 und 8 sind, sind jeweils am Rand und in einem mittleren Bereich kreisrunde Ringe aufgemalt, wobei zusätzlich durch die Zielpunkte 7 und 8 jeweils ein Fadenkreuz verläuft. Sowohl die kreisrunden Ringe 27 bis 30 als auch die Fadenkreuze 31 und 32 dienen zur leichteren Erfassung der Zielpunkte 7 und 8.

Der Maßstab 5, der in Figur 2 gezeigten Ausführungsform, besteht aus Papier oder Pappe und weist an seiner Rückseite eine Haft- oder Klebeschicht auf, die insbesondere eine lösbare Anbringung des Maßstabs 5 an eine Vielzahl von Gegenständen, wie beispielsweise Wänden 1, Kunststoffen, Metallen und dergleichen ermöglicht.

Um die Größenverhältnisse an der Wand 1 zu bestimmen und/oder zu simulieren, wird der Maßstab 5 wie er in Figur 2 beschrieben ist, an der Wand 1 in dem Bereich angeordnet, in dem das Bild 4 vorgesehen ist. Nach dem Anbringen des Maßstabes 5 über die Haft- oder Klebschicht wird mit einer Kamera 24, wie in Figur 4 zu sehen ist, eine Abbildung von der Wand 1 angefertigt.

Da der Abstandshalter 6 eine fixe, vorgegebene Länge aufweist und der Maßstab 5 in einer glatten und ausgestreckten Art und Weise an der Wand 1 befestigt worden ist, können auf dem von der Kamera 24 gemachten Bild von der Wand 1 mit dem Maßstab 5 aufgrund des nunmehr in dem Bild vorhandenen Maßstabs die Größenverhältnisse an der Wand 1 bestimmt werden. Insbesondere ist es beispielsweise möglich die Größe der Kommode 3 oder der Tür 2 zu berechnen.

Entsprechend ist es aber auch möglich Bilder 4 mit einer vorgegebenen Größe maßstabsgetreu in der Abbildung darzustellen. Dazu wird die Abbildung, die mittels der Kamera 24 von dem interessierenden Bereich der Wand 1 gemacht worden ist, in eine Datenverarbeitungsanlage eingelesen, z. B. durch direktes Einlesen von Bilddaten eines digitalen Bildes in Speichermittel der Datenverarbeitungsanlage oder durch Einscannen der Abbildung und Weiterverarbeitung der so erhaltenen digitalen Abbildung.

In der Datenverarbeitungsanlage sind Auswerte- und/oder Simulationsmittel vorgesehen, die es ermöglichen ausgehend von dem in der Abbildung dargestellten Maßstab 5 die Größenverhältnisse in der Abbildung zu bestimmen.

Da vorzugsweise entsprechende Mittel zur Darstellung der Abbildung und/oder von zusätzlichen Bildbestandteilen in der Datenverarbeitungsanlage vorhanden sind, ist es auch möglich Bildbestandteile mit bestimmten Größen maßstabsgetreu in die Abbildung zu projizieren. Auf diese Weise kann virtuell das aufzuhängende Bild an der Wand 1 dargestellt werden. Da zudem vorzugsweise Mittel zum Erzeugen/Einlesen von Bildbestandteilen in der Datenverarbeitungsanlage integriert sind, können insbesondere individuelle Original-Bildbestandteile in die Abbildung integriert werden.

Insgesamt ist somit festzustellen, dass auf diese Art und Weise sehr einfach maßstabsgetreue Simulationen von virtuellen, also künstlich erzeugten Gegenständen oder realen Objekten in wirklichen Umgebungen dargestellt werden können. Dies kann nicht nur hilfreich bei der Auswahl eines Bildes für einen Raum oder für eine Wand sein, sondern allgemein für alle möglichen Gegenstände, wie beispielsweise Möbel in Räumen, Bauwerke, wie Häuser an Plätzen, Straßen oder dergleichen. Außerdem kann die Erfindung z. B. für Werbetafeln oder Aufschriften auf Kraftfahrzeugen usw. eingesetzt werden.

Eine zweite Ausführungsform eines erfindungsgemäßen Maßstabs 11 ist in der Figur 3 dargestellt. Statt der beiden Zielpunkte 7 und 8, wie bei der Ausführungsform der Figur 2 sind bei dem Maßstab 11 der Ausführungsform der Figur 3 vier Zielpunkte 16, 17, 18 und 19 vorgesehen, die über die jeweiligen Abstandshalter 15, 14, 13 und 12 jeweils paarweise voneinander beabstandet sind.

Um die Zielpunkte 16 bis 19 sind jeweils wieder Hilfsmittel für die Zielerfassung in Form von Zielringen 20, 21, 22 und 23 sowie entsprechende Fadenkreuze vorgesehen.

Mittels der zusätzlichen Zielpunkte ist es möglich den Blickwinkel und/oder die Perspektive der Kamera bei der Erstellung der Abbildung zu berücksichtigen, so dass exaktere Bestimmungen der Größenverhältnisse und insbesondere Simulationen der Größenverhältnisse möglich sind.

Wie die Figur 4 in einer Seitenansicht zeigt, kann beispielsweise die Höhenlage der Kamera 24 zu unterschiedlichen Blickrichtungen und Blickwinkeln für die Abbildung führen, wie durch die beiden Dreiecke 26 und 27 (strichliert) angedeutet ist. Da beispielsweise bei einer rechteckigen Maßstabsform, bei der die Zielpunkte 16 bis 19 an den Ecken des Rechtecks sitzen, die Verzerrung zu einem Trapez oder dergleichen auf schräge Abbildungsbedingungen hindeuten, kann mittels der Daten des Maßstabes die Winkelverzerrung berechnet und berücksichtig werden.

Der Maßstab 11 der Figur 3 kann ebenfalls wie der Maßstab 5 der Figur 2 aus Papier oder Pappe gebildet sein. Durch die räumliche, größere Ausdehnung aufgrund der größeren Anzahl an Zielpunkten, ist jedoch beispielsweise auch eine Ausbildung des Maßstabes 5 aus Kunststoff vorteilhaft. Auch der Maßstab 11 weist an seiner Rückseite eine Haft- oder Klebeschicht auf, die zum entfernbaren Anbringen des Maßstabes 11 an einem Gegenstand oder einem Ort dient.

Obwohl bei den bevorzugten Ausführungsbeispielen der Figuren 2 und 3 die Maßstäbe 5 bzw. 11 fest vorgegebene Abstandshalter 6 bzw. 12 bis 15 aufweisen, ist es auch denkbar variabel einstellbare Abstandshalter zu realisieren, die beispielsweise teleskopartig auseinander und ineinander geschoben werden können. Darüber hinaus ist es auch möglich die Zielpunkte ohne Abstandhalter einzusetzen und den Abstand der Zielpunkte exakt zu vermessen, wobei dann der entsprechende Abstand in die Auswerte- und/oder Simulationsmittel der Datenverarbeitungsanlage eingegeben werden.

Obwohl die vorliegende Erfindung anhand der bevorzugten Ausführungsbeispiele beschrieben worden ist, ist es selbstverständlich, dass der Schutz nicht auf diese Ausführungsformen beschränkt ist, sondern durch den Schutzbereich der beigefügten Ansprüche definiert ist, wobei sämtliche Kombinationen der Merkmale der in der Beschreibung und den Ansprüchen definierten Erfindung denkbar sind.

## Patentansprüche

1. Maßstab zur Bestimmung und/oder Simulation von Größenverhältnissen in einem ausgewählten Bereich eines Gegenstandes oder eines Ortes,
**gekennzeichnet durch**
mindestens zwei Zielpunkte (7, 8), die einen definierten oder definierbaren Abstand zueinander aufweisen und an dem Gegenstand oder an dem Ort anbringbar sind.

2. Maßstab nach Anspruch 1,
**dadurch gekennzeichnet, dass**
die Zielpunkte Mittel zur exakten Bestimmung der Punktlage, insbesondere Fadenkreuze (31, 32), Zielringe (27 bis 30) und dergleichen aufweisen.

3. Maßstab nach einem der vorhergehenden Ansprüche,
**dadurch gekennzeichnet, dass**
mindestens ein dritter Zielpunkt (18), insbesondere ein dritter und ein vierter Zielpunkt (19) vorgesehen sind.

4. Maßstab nach einem der vorhergehenden Ansprüche,
**dadurch gekennzeichnet, dass**
ein Zielpunkt durch fest vorgegebene oder variabel einstellbare Abstandshalter (6) mit mindestens jeweils einem weiteren Zielpunkt verbunden ist.

5. Maßstab nach einem der vorhergehenden Ansprüche,
**dadurch gekennzeichnet, dass**
zur Anbringung an einem Gegenstand oder an einem Ort Mittel zur Befestigung, insbesondere zur wieder lösbaren Befestigung vorgesehen sind.

6. Maßstab nach Anspruch 5,
**dadurch gekennzeichnet, dass**
die Mittel zur Befestigung Klebemittel, insbesondere lösbare Klebemittel oder sonstige wieder lösbare Haftmittel, wie Klettverschlüsse oder dergleichen umfassen.

7. Maßstab nach einem der vorhergehenden Ansprüche,
**dadurch gekennzeichnet, dass**
der Maßstab (5) aus Papier, Pappe und/oder Kunststoff, insbesondere einstückig gebildet ist.

8. System zur Bestimmung und/oder Simulation von Größenverhältnissen in einem ausgewählten Bereich eines Gegenstandes oder eines Ortes,
**gekennzeichnet durch**
einen Maßstab (5) nach einem der vorhergehenden Ansprüche und Auswerte- und/oder Simulationsmitteln, insbesondere einem auf einem in einer Datenverarbeitungsanlage auslesbaren Speichermittel gespeicherten Auswerte- und/oder Simulationsverfahren, welches auf einer Datenverarbeitungsanlage ausführbar ist.

9. System nach Anspruch 8,
**dadurch gekennzeichnet, dass**
die Auswerte- und/oder Simulationsmittel Lesemittel zum Einlesen einer Abbildung des Gegenstandes oder des Ortes mit an dem Gegenstand oder dem Ort angebrachtem Maßstab umfassen.

10. System nach Anspruch 8 oder 9,
**dadurch gekennzeichnet, dass**
die Auswerte- und/oder Simulationsmittel Mittel zum Identifizieren und Lokalisieren der Zielpunkte umfassen.

11. System nach einem der Ansprüche 8 bis 10,
**dadurch gekennzeichnet, dass**
die Auswerte- und/oder Simulationsmittel Berechnungsmittel zur Berechnung der Größenverhältnisse der Bildgröße oder von Bildausschnitten aus dem Maßstab umfassen.

12. System nach einem der Ansprüche 8 bis 11,
**dadurch gekennzeichnet, dass**
die Auswerte- und/oder Simulationsmittel Mittel zur Bestimmung und/oder Korrektur der Abbildungsperspektive umfassen.

13. System nach einem der Ansprüche 8 bis 12,
**dadurch gekennzeichnet, dass**
die Auswerte- und/oder Simulationsmittel Mittel zur Erzeugung und/oder zum Einlesen von Bildbestandteilen und/oder Mittel zum Einblenden von Bildbestandteilen in die Abbildung des Gegenstandes oder Ortes umfassen.

14. System nach einem der Ansprüche 8 bis 13,
**dadurch gekennzeichnet, dass**
die Auswerte- und/oder Simulationsmittel Mittel zum Darstellen der Abbildung und/oder zusätzlicher Bildbestandteile umfassen.

15. System nach einem der Ansprüche 8 bis 14,
**dadurch gekennzeichnet, dass**
das System Mittel zum Erstellen einer Abbildung des Gegenstandes oder des Ortes mit an dem Gegenstand oder dem Ort angebrachtem Maßstab, insbesondere eine Kamera, vorzugsweise Digitalkamera, und/oder Scanner oder dergleichen umfasst.

16. System nach einem der Ansprüche 8 bis 15,
**dadurch gekennzeichnet, dass**
die Auswerte- und/oder Simulationsmittel Datenfernübertragungsmittel zur Übertragung von Bild-, Text- und/oder Steuerungsdaten, insbesondere zur zumindest teilweisen drahtlosen Übertragung und/oder Übertragung über Daten- oder Telefonnetze, insbesondere über das Internet umfassen.

17. System nach Anspruch 16,
**dadurch gekennzeichnet, dass**
die Datenfernübertragungsmittel so ausgestaltet sind, dass die Übertragung online während der Auswertung erfolgen kann.

18. Verfahren zur Bestimmung und/oder Simulation von Größenverhältnissen in einem ausgewählten Bereich eines Gegenstandes oder eines Ortes
**dadurch gekennzeichnet, dass**
in einem ersten Schritt ein Maßstab (5) nach einem der vorhergehenden Ansprüche in dem ausgewählten Bereich an dem Gegenstand oder an dem Ort angeordnet wird,
in einem zweiten Schritt eine Abbildung des Gegenstandes oder Ortes mit dem in dem ausgewählten Bereich angeordneten Maßstab angefertigt wird und
in einem dritten Schritt die Abbildung in eine Datenverarbeitungsanlage eingelesen wird, die derart ausgestaltet ist, dass die Größenverhältnisse in dem ausgewählten Bereich bestimmt und/oder simuliert werden.

19. Verfahren nach Anspruch 18,
**dadurch gekennzeichnet, dass**
die Datenverarbeitungsanlage die Auswerte- und/oder Simulationsmittel des Systems nach einem der Ansprüche 8 bis 17 umfasst.

20. Verfahren nach einem der Ansprüche 18 oder 19,
**dadurch gekennzeichnet, dass**
es zur virtuellen Darstellung eines Produktes, insbesondere eines Bildproduktes, wie eines Posters, Gemäldes, Photos, oder eines Druckproduktes, wie einer Werbegraphik oder dergleichen dient.
